Europäisches Patentamt

European Patent Office

Office européen des brevets

(11) Veröffentlichungsnummer: **0 382 239**
**A2**

## (12) EUROPÄISCHE PATENTANMELDUNG

(21) Anmeldenummer: 90102577.5

(22) Anmeldetag: 09.02.90

(51) Int. Cl.[5]: **B62B 3/06**

(30) Priorität: 09.02.89 HU 60389

(43) Veröffentlichungstag der Anmeldung:
16.08.90 Patentblatt 90/33

(84) Benannte Vertragsstaaten:
AT DE GB IT SE

(71) Anmelder: HIDROMECHANIKA
KISSZÖVETKEZET
Nagytétényi ut 96/a
H-1222 Budapest(HU)

(72) Erfinder: Petrik, Akos, Dipl.-Ing.
Nádorfejérvár köz.2
H-1119 Budapest(HU)
Erfinder: Nádor, Antal
Fürj utca 40
H-1124 Budapest(HU)
Erfinder: Nádor, Antal, Jr., Dipl.-Ing.
Törökugrato, u. 6
H-1118 Budapest(HU)

(74) Vertreter: Bardehle, Heinz, Dipl.-Ing. et al
Patent- und Rechtsanwälte
Bardehle-Pagenberg-Dost-Altenburg-Frohwi-
tter-Geisler & Partner Postfach 860620
D-8000 München 80(DE)

(54) Hand-Gabelstapler.

(57) Gegenstand der Erfindung ist ein Hand-Gabelstapler, insbesondere zur Bewegung von auf Ladeplatten angeordneten Frachtgütern. Der Hand-Gabelstapler hat ein auf Rollen /6/ rollendes Gerüstwerk /1/
und eine daran steif befestigte, mittels Rollen /7/
unterstützte Stützgabel /1a/. Das Hebewerk ist ein
zwischen der Stützgabel /1a/ und der Hebegabel /3/
angeordneter pneumatischer Schlauch /2/, welcher
mit dem im Gerüstwerk /2/ ausgebildeten Luftbehälter durch ein Ventilsystem verbunden ist. Das Ventilsystem hat ein in der Funktion des Hebeweges der
Hebegabel /3/ gesteuertes Druckabgrenzglied. Das
Gerüstwerk /1/ ist aus, einen Luftbehälter bildenden,
geschlossenen Profilen ausgebildet.

## HAND-GABELSTAPLER

Gegenstand der Erfindung ist ein Gabelstapler, insbesondere zur Bewegung von auf Ladeplatten angeordneten Gütern, welcher Hand-Gabelstapler ein auf Rädern rollendes Gerüstwerk und eine daran steif befestigte, mittels Rollen unterstützte Stützgabel hat, an welcher Stützgabel mit der Zwischenschaltung eines Hebewerkes eine Hebegabel angeordnet ist.

Die bekannten und verbreitet verwendeten Hand-Gabelstapler wurden mit der geringmässigen Modifizierung des Aufbaus der mit mechanischem Hebewerk versehenen Hand-Gabelstapler entwikkelt, und sind mit einem hydraulischen Hebewerk gebaut.

Die gemeinsamen Merkmale des Aufbaus der Gabelstapler sind wie folgt: sie haben ein auf Rollen rollendes Gerüstwerk und eine daran steif befestigte, mittels Rollen unterstützte Stützgabel, an welcher Stützgabel mit der Zwischenschaltung eines Hebewerkes eine Hebegabel angeordnet ist. Das Hebewerk ist sowohl in der mechanischen als auch in der hydraulischen Ausbildung ein Hebelmechanismus, dessen Betätigungsorgan im Gerüstwerk angeordnet ist und dessen Hebeelemente ihre Wirkung einerseits auf die Hebegabel, andererseits auf die Rolle der Stützgabel ausüben.

Der eine Nachteil der bekannten Lösungen liegt darin, dass das Heben mittels Handkraft durchgeführt werden soll, und ein weiterer Nachteil besteht darin, dass das Selbstgewicht des derart ausgebildeten Gabelstaplers infolge der grossen Masse der im Heben teilnehmenden Elemente sehr gross ist. Ein weiterer Nachteil der Verwendung des Hand-Gabelstaplers mit hydraulischem Hebewerk liegt darin, dass der Füllstoff des hydraulischen Systems die Umgebung in der Abhängigkeit der Hochwertigkeit der technischen Ausbildung und des Verschleisses verschmutzen kann.

Zielsetzung der Erfindung ist, die obigen Nachteile durch Ausbildung eines, die menschliche Kraft nicht beanspruchenden Hebewerkes in bedeutendem Masse zu vermindern bzw. zu beseitigen.

Zur Entwicklung der Erfindung führte diejenige Erkenntnis, dass die mittels Luft gefüllten Kissen fähig sind, eine im Vergleich zu ihrem Selbstgewicht sehr grosse Masse erhoben zu halten und diese bekannte Erscheinung bei Hand-Gabelstaplern gut auszunutzen ist, weil bei Hand-Gabelstaplern das Heben von grossen Massen auf kurzer Hublänge erforderlich ist.

In der erfindungsgemässen Lösung der Aufgabe ist das Hebewerk ein zwischen der Hebegabel und der Stützgabel angeordneter pneumatischer Schlauch, welcher mit dem im Gerüstwerk ausgebildeten Luftbehälter durch ein Ventilsystem verbunden ist.

Auf zweckmässige Weise hat das Ventilsystem eine in der Funktion des Hebeweges der Hebegabel gesteuerte Druckabgrenzplatte.

Vorteilhaft ist das Gerüstwerk aus, den Luftbehälter bildenden geschlossenen Profilen ausgebildet.

Der Vorteil des erfindungsgemässen Hand-Gabelstaplers liegt darin, dass er zum Heben keine menschliche Kraft beansprucht, und das Selbstgewicht des Gabelstaplers -gleiche Hebeparameter voraussetzend - geringer ist als bei den bekannten Lösungen, weiterhin seine Verwendung umweltfreundlich ist, die reine Umgebung nicht verschmutzt.

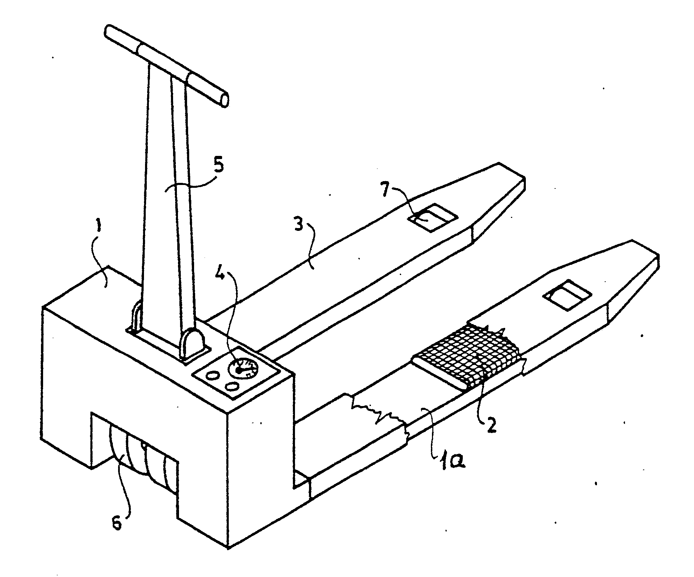

Untenstehend wird das Wesen der Erfindung mit Hilfe der beiliegenden Zeichnung aufgrund eines Ausführungsbeispiels näher erläutert.

In der Zeichnung ist der Gabelstapler in perspektivischer Ansicht dargestellt.

In der Zeichnung ist der erfindungsgemässe Hand-Gabelstapler dargestellt, dessen Gerüstwerk 1 schachtelförmige, hohle, geschlossene Räume beinhaltet, welche geschlossene Räume mittels Druckluft oder neutrales Gas aufgefüllt werden können, und einen Luftbehälter bilden. Aus dem Gerüstwerk 1 ragt eine damit steif verbundene Stützgabel 1a in horizontaler Richtung aus, welche Stützgabel 1a an ihrem freien Ende mittels Rollen 7 unterstützt ist. An der oberen Fläche der Stützgabel 1a ist ein pneumatischer Schlauch 2 angeordnet, welcher von oben durch eine Hebegabel 3 bedeckt ist. Die Hebegabel ist in vertikaler Richtung bewegbar an der Stützgabel 1a angeführt. Der pneumatische Schlauch 2 ist mit dem im Gerüstwerk 1 ausgebildeten Luftbehälter durch ein Ventilsystem verbunden, wobei die Betätigungsorgane 4 des Ventilsystems am Gerüstwerk 1 angeordnet sind. Das Ventilsystem hat weiterhin ein in der Funktion des Hebeweges der Hebegabel 3 gesteuertes Druckabgrenzglied, und enthält weiterhin die Luftbehälterauffüllungs-, die Behälterauffüllungs- und Schlauchentleerungselemente.

Das Gerüstwerk 1 rollt auf Rollen 6 und ist mit einer zum Handzug der gehobenen Last geeigneten, um ein Gelenk hoch- und niederkippbaren Zugstange 5 versehen.

Untenstehend wird der Betrieb des beispielsweise Hand-Gabelstaplers ausführlich beschrieben:

Der Luftbehälter des Gabelstaplers wird mittels Druckluft oder neutrales Gas aufgefüllt. Die Auffüllung kann vom Druckluftnetz, vom Kompressor oder aus Gasflasche erfolgen.

Im leeren Zustand des Schlauches ist der Schlauch 2 flach, die Hebegabel 3 liegt in ihrer unteren Lage. In diesem Zustand werden die Gabel des Gabelstaplers unter die Ladeplatte geschoben. Danach wird mittels Betätigung der Betätigungsorgane 4 der Schlauch 2 mittels im Luftbehälter befindlicher Druckluft oder Gas aufgefüllt, welcher anhand seiner Formveränderung die Hebegabel 3 mit der daran aufliegenden Last zusammen aufhebt. Bei Erreichung der vorgeschriebenen Hubhöhe schliesst das Druckabgrenzglied des Ventilsystems das Schlauchauffüllungsventil ab. In diesem Zustand kann das Frachtgut mit Hilfe des Hand-Gabelstaplers transportiert werden.

Das Niederlegen der Last erfolgt mittels Öffnung des Schlauchentleerungsventils des Ventilsystems. Die Öffnung des Ventils erfolgt mit Hilfe der Betätigungsorgane 4. Die Luft /oder das neutrale Gas/ strömt aus dem Schlauch 2 durch das Ventil in die Atmosphäre.

Das pneumatische Hebewerk verbraucht Luft nur beim Heben, das Druckabgrenzglied beschränkt sogar diese Luftmenge auf das minimal erforderliche Mass. Auf diese Weise ist die Luftmenge eines Behälters für zahlreiche Hebungen genügend. Der am Tafel der Betätigungsorgane 4 angeordnete Druckmesser zeigt den im Schlauch 2 herrschenden Druck, und zeigt so das Gewicht der gehobenen Masse auf der kg-Skala des Druckmessers.

Die Vorteile der erfindungsgemässen Lösung sind, dass das Heben keine menschliche Kraft erfordert, das Selbstgewicht des Gabelstaplers geringer ist als das der bekannten Gabelstapler, und so kann auch die Zugförderung mit geringerer Kraft erfolgen, weiterhin verursacht sein Betrieb nicht einmal im Falle seiner Beschädigung Umweltverschmutzung.


## Ansprüche

1. Hand-Gabelstapler, insbesondere zur Bewegung von auf Ladeplatten angeordneten Gütern, welcher Hand-Gabelstapler ein auf Rädern rollendes Gerüstwerk und eine daran steif befestigte, mittels Rollen unterstützte Stützgabel hat, an welcher Stützgabel mit der Zwischenschaltung eines Hebewerkes eine Hebegabel angeordnet ist, **dadurch gekennzeichnet,** dass das Hebewerk ein zwischen der Hebegabel /3/ und der Stützgabel /1/ angeordneter pneumatischer Schlauch /2/ ist, welcher mit dem am Gerüstwerk /1/ ausgebildeten Luftbehälter durch ein Ventilsystem verbunden ist.

2. Hand-Gabelstapler nach Anspruch 1, **dadurch gekennzeichnet,** dass das Ventilsystem ein in der Funktion des Hebeweges der hebegabel /3/ gesteuertes Druckabgrenzglied hat.

3. Hand-Gabelstapler nach Anspruch 1 und 2, **dadurch gekennzeichnet,** dass das Gerüstwerk /1/ aus, einen Luftbehälter bildenden, geschlossenen Profilen ausgebildet ist.